(19) Europäisches Patentamt / European Patent Office / Office européen des brevets

(11) **EP 3 892 924 B1**

(12) **EUROPÄISCHE PATENTSCHRIFT**

(45) Veröffentlichungstag und Bekanntmachung des Hinweises auf die Patenterteilung:
**11.10.2023  Patentblatt 2023/41**

(21) Anmeldenummer: **21165920.6**

(22) Anmeldetag: **30.03.2021**

(51) Internationale Patentklassifikation (IPC):
**F24D 3/16** (2006.01)     **F24F 5/00** (2006.01)
**F24F 13/24** (2006.01)

(52) Gemeinsame Patentklassifikation (CPC):
**F24D 3/165; F24F 5/0092; F24F 13/24;**
F24F 2013/242; Y02B 30/00

(54) **STRAHLFLÄCHENAUFBAU**

RADIATING SURFACE STRUCTURE

STRUCTURE DE SURFACE RAYONNANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2020  CH 4132020**

(43) Veröffentlichungstag der Anmeldung:
**13.10.2021  Patentblatt 2021/41**

(73) Patentinhaber: **Zehnder Group International AG 5722 Gränichen (CH)**

(72) Erfinder: **KLUG, Peter
77933  Lahr (DE)**

(74) Vertreter: **Rentsch Partner AG
Kirchenweg 8
Postfach
8034 Zürich (CH)**

(56) Entgegenhaltungen:
EP-A2- 0 955 503     WO-A1-91/13294
DE-C- 964 539     DE-U1-202016 105 364
GB-A- 971 025

**Beschreibung**

Die Erfindung betrifft einen Strahlflächenaufbau, insbesondere Deckenstrahlflächenaufbau, mit Rohren und/oder einem Rohrregister zur Führung eines Heiz- und/oder Kühlmediums, mit einer eine Strahlfläche bereitstellenden Strahlplatte und mit einer Schürze, wobei die Schürze der Strahlplatte derart seitlich zugeordnet ist, dass sie die Konvektion von Luft über einen Seitenrand der Strahlplatte hinweg begrenzt.

Dabei dient die Kombination aus Strahlplatte und Schürze dem Grunde nach dem Zweck, die unerwünschte Konvektion von erwärmter Luft über die Seitenränder der Strahlplatte hinweg zu verhindern.

Eine solche Ausführung ist beispielsweise aus der FR 2 085 165 A1 bekannt. Der dortige Deckenstrahlflächenaufbau weist eine Strahlplatte und eine Schürze auf. Die Schürze bildet mit dem Seitenrand der Strahlplatte einen Stauraum, welcher der Aufnahme von warmer Luft dient, die über die Seitenränder der Strahlplatte strömt. Eine weitere Strahlenplatte ist in der DE 20 2016 105 364 U1 offenbart.

Allerdings kann auch diese Ausführungsform die seitliche Konvektion nicht vollends verhindern, da der Stauraum nach gegebener Heizdauer vollständig gefüllt ist. Bei gefülltem Stauraum strömt die erwärmte Luft, die in dem Stauraum keinen Platz mehr hat, über die Seitenränder der Schürze. Mit anderen Worten läuft der Stauraum über.

Es sind in diesem Zusammenhang weitere Strahlplattenaufbauten bekannt geworden, die diesen Nachteil beheben wollten. So ist beispielsweise aus der EP 2 206 970 A1 eine Stauraum-Kaskade offenbart. Zur Erhöhung des aufnehmbaren Volumens an erwärmter Luft sind in seitlicher Richtung zwei sich aneinander anschließende Stauräume ausgebildet. Der erste Stauraum befindet sich zwischen nach unten gezogenen Seitenrändern der Strahlenplatte. Der zweite Stauraum ist zwischen der Außenseite des Seitenrandes und einer dem Seitenrand zugeordneten Schürze gebildet. Ein aus dem ersten Stauraum überfließendes Volumen wird von dem zweiten Stauraum aufgefangen. Ist der zweite Stauraum vollständig gefüllt, strömt die weitere erwärmte Luft über die Ränder der Schürze.

Auch mit diesem Aufbau kann die seitliche Konvektion folglich nicht vollständig verhindert werden. Ferner hat diese Ausgestaltung den Nachteil, dass ein beträchtlicher Teil der Wärmestrahlung ungenutzt bleibt, da sie über den vergleichsweise grossflächigen Seitenrand der Strahlplatte zur Seite abgegeben wird.

Durch die Minderung der seitlichen Konvektion wird die (Gesamt-)Leistung gemindert. Die Strahlungsleistung wird durch einen Strahlungsschirm leicht erhöht, da das Warmluftpolster unterhalb der Deckenstrahlplatte zu einer geringfügigen Erhöhung der Oberflächentemperatur der Strahlplatte führt.

Es besteht folglich ein vitales Interesse daran, die Leistung von Deckenstrahlflächenaufbauten, insbesondere von Deckenstrahlheizkörpern, zu verbessern.

Der Erfindung liegt damit die Aufgabe zu Grunde, die Leistung eines Strahlflächenaufbaus insgesamt zu verbessern.

Zur Lösung der Aufgabe schlägt die Erfindung einen gattungsgemässen Strahlflächenaufbau gemäss dem unabhängigen Anspruch 1 vor, bei dem die Schürze und die Strahlplatte thermisch leitend miteinander verbunden sind und die nach unten oder nach innen weisende Strahlfläche (16a, 16b, 17a, 17b) einen Emissionsgrad $\varepsilon$ zwischen 0.9 und 1 aufweist.

Vorzugsweise sind die Schürze und die Strahlplatte über ein thermisches Leitungselement miteinander verbunden. Das thermische Leitungselement ermöglicht eine gute Wärmeleitung zwischen der Strahlplatte und der Schürze, so dass die Schürze nicht nur mit der Raumluft, sondern auch mit der Strahlplatte in thermischem Kontakt ist, wodurch die Schürze und insbesondere deren Strahlfläche im Betrieb eine ähnlich hohe Temperatur wie die Strahlplatte hat. Genauer gesagt, ist die Temperatur der Strahlfläche der Schürze im thermischen Kontaktbereich zur (eigentlichen) Strahlplatte etwa so hoch wie die Temperatur der thermisch aktivierten Strahlplatte und nimmt mit zunehmender Entfernung vom thermischen Kontaktbereich entlang der Strahlfläche der Schürze ab. Ähnlich wie die Strahlplatte, die im Betrieb eine relativ hohe Temperatur hat und als "aktiver Strahler" wirkt, hat auch die Schürze mit ihrer Strahlfläche im Betrieb eine relativ hohe Temperatur und wirkt als weiterer "aktiver Strahler".

Vorzugsweise enthält die Schürze eine sich parallel zur Strahlplatten-Strahlfläche der Strahlplatte erstreckende Schürzen-Strahlfläche.

Man betrachte ein Koordinatensystem, bei welchem die x-Achse die horizontale Entfernung eines Punktes der Schürzen-Strahlfläche von der heissen Kante der thermischen Kopplung zur Strahlplatten-Strahlfläche bedeutet, und bei welchem die y-Achse die vertikale Entfernung (nach unten) eines Punktes der Schürzen-Strahlfläche von der heissen Kante der thermischen Kopplung zur Strahlplatten-Strahlfläche bedeutet.

Eine sich parallel zur horizontalen Strahlplatten-Strahlfläche erstreckende Schürzen-Strahlfläche (x>0, y=0) hat an ihrer Oberfläche für eine gegebene horizontale Entfernungskomponente x vom Ort (x=0) ihrer thermischen Kopplung mit der Strahlplatten-Strahlfläche eine höhere Oberflächentemperatur T(x>0, y=0) als eine sich nicht-parallel, d.h. schräg zur horizontalen Strahlplatten-Strahlfläche nach unten erstreckende Schürzen-Strahlfläche (x>0, y>0) bei derselben horizontalen Entfernungskomponente x (mit einer zusätzlichen vertikalen Entfernungskomponente y). Deren entsprechende Oberflächentemperatur T(x>0, y>0) ist an jedem Punkt (x>0, y>0) kleiner als beim entsprechenden Punkt (x>0, y=0) mit gleicher horizontaler Entfernung x.

Der für die Wärmeleitung zwischen dem "heissen" Punkt (x=0, y=0) der thermischen Kopplung und dem Punkt (x>0, y=0) der horizontalen/parallelen Schürzen-Strahlfläche massgebliche Weg s = x für die Wärmeleitung entlang der parallelen/horizontalen Strahlfläche ist kleiner als der für die Wärmeleitung zwischen dem "heissen" Punkt (x=0, y=0) der thermischen Kopplung und dem Punkt (x>0, y>0) der nicht-parallel, d.h. schräg zur horizontalen Strahlplatten-Strahlfläche nach unten verlaufenden Schürzen-Strahlfläche massgebliche Weg $s = (x^2 + y^2)^{1/2}$ für die Wärmeleitung entlang der nicht-horizontalen schräg nach unten verlaufenden Strahlfläche:

$$s = (x^2 + y^2)^{1/2} > x$$

Da die Strahlungsleistung einer Oberfläche mit Temperatur T proportional zu $T^4$ ist, wird die kürzere Breite (B1 von A nach B in Fig. 4) der horizontalen/parallelen Schürzen-Strahlfläche durch die höhere Durchschnittstemperatur entlang der kürzeren Breite (x=B1 in Fig. 4) überkompensiert, was dazu führt, dass die thermisch gekoppelte Schürze mit horizontaler/paralleler Schürzen-Strahlfläche bei gleicher Temperatur der Strahlplatten-Strahlfläche insgesamt einen höheren Beitrag zur Strahlungsleistung liefert als eine nichthorizontale, schräg nach unten verlaufende thermisch gekoppelte Schürze.

Gemäss einem besonders bevorzugten Merkmal der Erfindung ist vorgesehen, dass die jeweilige Schürze einen ersten Abschnitt und einen dazu abgewinkelten zweiten Abschnitt aufweist.

Vorzugsweise hat der erste Abschnitt einer jeweiligen Schürze jeweils eine erste Strahlfläche, welche sich parallel zur Strahlfläche der Strahlplatte erstreckt.

Vorzugsweise hat der zweite Abschnitt einer jeweiligen Schürze jeweils eine zweite Strahlfläche, welche sich quer, insbesondere orthogonal, zur Strahlfläche der Strahlplatte erstreckt.

Vorzugsweise erstrecken sich die erste Spiegelfläche einer jeweiligen Schürze und die Strahlfläche der Strahlplatte in/entlang einer gemeinsamen Ebene.

Bei einer besonders bevorzugten Ausführung der Erfindung hat der erste Abschnitt einer jeweiligen Schürze eine sich vom Rand der Strahlfläche bis zur Abwinkelung der jeweiligen Schürze erstreckende Breite B1, welche im Bereich des einfachen Abstandes und des vierfachen Abstandes der Rohre liegt.

Vorzugsweise liegt die Breite B1 im Bereich des einfachen Abstandes und des zweifachen Abstandes der Rohre voneinander.

Bei einer besonders bevorzugten Ausführung der Erfindung hat der zweite Abschnitt einer jeweiligen Schürze eine sich von der Abwinkelung der jeweiligen Schürze bis zum Rand der Schürze erstreckende Breite B2, welche im Bereich des zweifachen Durchmessers bis achtfachen Durchmessers der Rohre (7) liegt.

Vorzugsweise liegt die Breite B2 im Bereich des dreifachen Durchmessers bis fünffachen Durchmessers der Rohre (7).

Vorzugsweise weisen die beiden Schürzen zusätzlich zu ihrer ersten Strahlfläche und ihrer abgewinkelten zweiten Strahlfläche einen Andockbereich bzw. Hakenbereich auf, mit welchem sie an einem Seitenrand der Strahlplatte angebracht bzw. eingehängt werden können. Zweckmässigerweise liegt im Hakenbereich die am Seitenrand der Strahlplatte angebrachte bzw. eingehängte Schürze grossflächig am Seitenrand an, so dass zwischen der Strahlplatte und der Schürze eine gute thermische Kopplung gegeben ist. An den Orten, wo der Hakenbereich an dem Seitenrand der Strahlplatte grossflächig anliegt, kann eine Schicht aus Material hoher Wärmeleitfähigkeit, insbesondere eine Graphitpartikel aufweisende Schicht, eingebettet sein.

Die Schürze kann als Nachrüstsatz für schon installierte Strahlplatten verwendet werden.

Vorzugsweise ist die Schürze zumindest teilweise aus Metall, insbesondere aus Blech, gefertigt. Vorzugsweise enthält die Schürze Stahlblech mit einer Dicke im Bereich von 0,5 mm bis 2 mm.

Vorzugsweise hat beim dem Strahlflächenaufbau eine nach unten oder nach innen weisende Strahlfläche der Schürze einen Emissionsgrad $\varepsilon$, welcher zwischen 0,92 und 0,99 liegt. Zur Erreichung eines derart hohen Emissionsgrads weist die nach unten weisende Strahlfläche vorzugsweise eine Pulverlackierung bzw. Pulverbeschichtung auf.

Vorzugsweise trägt die die Schürze auf einer von der Strahlfläche abgewandten Seite eine thermische und/oder eine akustische Isolierung.

Vorzugsweise definiert eine Abwinkelung zwischen dem ersten Abschnitt und dem zweiten Abschnitt einen Winkel im Bereich von 90° und 100°, besonders bevorzugt einen Winkel von 90°.

Vorzugsweise hat bei dem Strahlflächenaufbau eine nach oben oder nach aussen weisende Strahlfläche bzw. Spiegelfläche der Schürze einen Emissionsgrad $\varepsilon$, welcher zwischen 0 und 0,06, insbesondere zwischen 0,02 und 0,04 liegt. Bei einem derart tiefen Emissionsgrad redet man in der Regel von "Spiegelfläche" anstatt von "Strahlfläche".

Die erwähnten Emissionsgrade können durch die Wahl des Schürzenmaterials und/oder durch eine Behandlung der Oberfläche des Schürzenmaterials erzielt werden.

Die Begriffe "Spiegelfläche" und "Strahlfläche" sind als Oberflächen eines Körpers zu verstehen, deren Strahlungsverhalten bezüglich Absorption und Emission elektromagnetischer Strahlung, insbesondere bezüglich Infrarotstrahlung, durch ihren Emissionsgrad $\varepsilon$ empirisch beschrieben wird. Der Emissionsgrad $\varepsilon$ eines Körpers bzw. seiner Oberfläche ist definiert als der Anteil der Strahlungsmenge, welche der Körper bzw. seine Oberfläche im Vergleich zu einem schwarzen Körper (idealer Wärmestrahler) abstrahlt. Der Emissionsgrad $\varepsilon$ eines realen Körpers bzw. seiner Oberfläche hat Werte zwischen 0 und 1 (0: perfekter Spiegel, 1: schwarzer Strahler). Er wird stark durch die Art der Atome oder Moleküle sowie durch die supramolekulare Struktur der Körperoberfläche bestimmt.

Die Erfindung betrifft ferner eine Deckenstrahlheizung bzw. Deckenstrahlkühlung mit einem erfindungsgemäßen Strahlflächenaufbau.

In dieser Ausgestaltung weist die Strahlfläche der Strahlplatte wenigstens teilweise in Einbaulage nach unten. Ebenso ist die Schürze derart ausgerichtet, dass sie sich in Einbaulage wenigstens teilweise nach unten erstreckt.

Es ist dabei bevorzugt, dass die in Einbaulage untere Kante der Schürze weiter unten positioniert ist, als der in Einbaulage unterste Punkt der Strahlplatte.

Eine erfindungsgemäße Deckenstrahlheizung kann aus einer Mehrzahl von Strahlflächenaufbauten modulartig zusammengesetzt sein. Eine Verbindung der Strahlflächenaufbauten in Längsrichtung und/oder in Breitenrichtung ist möglich. Vorzugsweise kann sich hierfür geeigneter Verbindungsmittel, wie Schrauben, Blenden, Rohrverbinder und dergleichen bedient werden. Es ist daher möglich, vergleichsweise kleine Deckenflächen, ab 5 m², mit der erfindungsgemäßen Deckenstrahlheizung zu bestücken und den anliegenden Raum zu beheizen.

Ferner ist es durch die modulartige Ausgestaltung der Deckenstrahlheizung möglich, vergleichsweise große Messe- oder Industriehallen zu beheizen, die Deckenflächen von über 1000 m² zur Bestückung aufweisen. In dieser Ausgestaltung handelt es sich um eine Großflächendeckenstrahlheizung.

Die Erfindung wird nachfolgend anhand eines Ausführungsbeispiels verdeutlicht. Dabei zeigt:

Fig. 1    in schematischer Darstellung eine Querschnittsansicht eines erfindungsgemäßen Ausführungsbeispiels des Deckenstrahlflächenaufbaus;

Fig. 2    in schematischer Darstellung eine Perspektivansicht eines Teils des erfindungsgemäßen Ausführungsbeispiels des Deckenstrahlflächenaufbaus;

Fig. 3    in schematischer Darstellung eine Querschnittsansicht des Teils des erfindungsgemäßen Ausführungsbeispiels des Deckenstrahlflächenaufbaus.

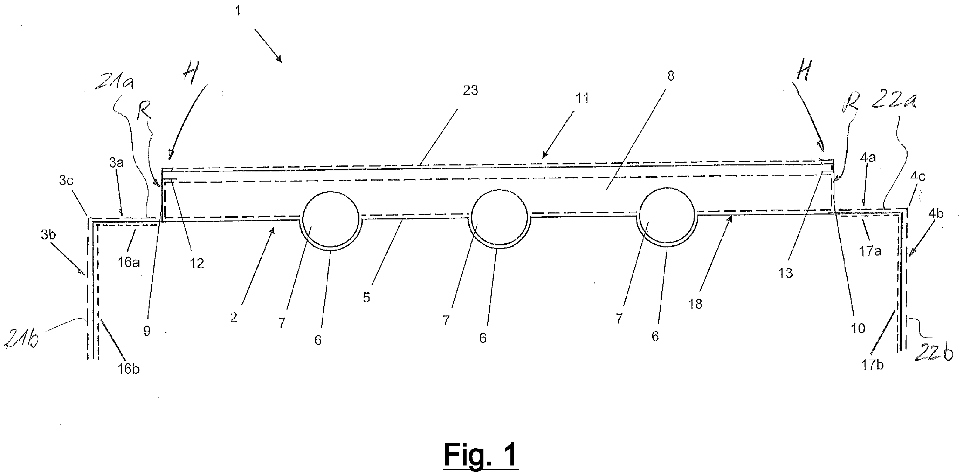

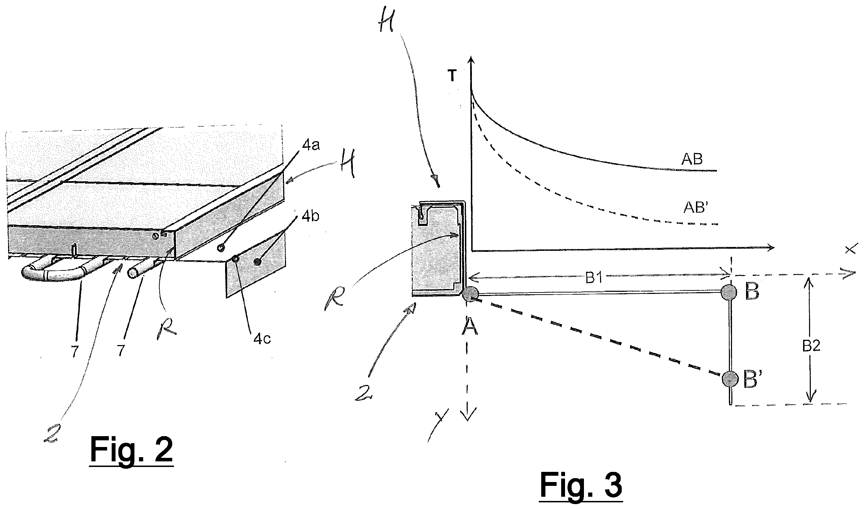

Fig. 1 zeigt in schematischer Darstellung ein erfindungsgemässes Ausführungsbeispiel eines Deckenstrahlflächenaufbaus 1 in Einbaulage. Die Schürzen 3, 4 sind mit dem Deckenstrahlflächenaufbau 1 thermisch gekoppelt, wie man am besten in Fig. 3 sieht.

Die jeweilige Schürze 3, 4 hat einen ersten Abschnitt 3a bzw. 4a und einen dazu abgewinkelten zweiten Abschnitt 3b bzw. 4b. Der erste Abschnitt 3a bzw. 4a der jeweiligen Schürze 3, 4 hat jeweils eine erste Strahlfläche 16a bzw. 17a, welche sich parallel zur Strahlfläche 5 der Strahlplatte 2 erstreckt. Der zweite Abschnitt 3b bzw. 4b einer jeweiligen Schürze 3, 4 hat jeweils eine zweite Strahlfläche 16b bzw. 17b, welche sich orthogonal zur Ebene der Strahlfläche 5 der Strahlplatte 2 erstreckt. Die erste Strahlfläche 16a bzw. 17a der jeweiligen Schürze 3, 4 und die Strahlfläche 5 der Strahlplatte 2 liegen in einer gemeinsamen Ebene.

Der erste Abschnitt 3a bzw. 4a einer jeweiligen Schürze 3, 4 hat eine sich vom Rand der Strahlfläche 5 bis zu einer jeweiligen Abwinkelung 3c bzw. 4c der jeweiligen Schürze 3, 4 erstreckende Breite B1, welche etwa dem zweifachen Abstand der Rohre 7 voneinander entspricht.

Der zweite Abschnitt 3b bzw. 4b einer jeweiligen Schürze 3, 4 hat eine sich von der Abwinkelung 3c bzw. 4c der jeweiligen Schürze 3, 4 bis zum Rand der Schürze 3, 4 erstreckende Breite B2, welche etwa dem dreifachen Durchmesser der Rohre (7) entspricht.

Die beiden Schürzen 3, 4 weisen zusätzlich zu ihrer ersten Strahlfläche 16a bzw. 17a und ihrer abgewinkelten zweiten Strahlfläche 16b bzw. 17b einen Andockbereich bzw. Hakenbereich H auf, mit welchem sie an einem Seitenrand R der Strahlplatte 2 angebracht bzw. eingehängt werden können. Im Hakenbereich H liegt die am Seitenrand R der Strahlplatte 2 angebrachte bzw. eingehängte Schürze 3, 4 grossflächig am Seitenrand R an, so dass zwischen der Strahlplatte 2 und der Schürze 3, 4 gute thermische Kopplung gegeben ist. An den Orten, wo der Hakenbereich H an dem Seitenrand R der Strahlplatte 2 grossflächig anliegt, kann eine Schicht aus Material hoher Wärmeleitfähigkeit, insbesondere eine Graphitpartikel aufweisende Schicht, eingebettet sein.

Fig. 2 zeigt in schematischer Darstellung einen Teil des Ausführungsbeispiels als Perspektivansicht. Man erkennt die Rohre 7 sowie einen Teil des ersten Abschnitts 4a, des zweiten Abschnitts 4b und der Abwinkelung 4c der rechtsseitigen Schürze 4.

Fig. 3 zeigt in schematischer Darstellung den in Fig. 2 gezeigten Teil des Ausführungsbeispiels als Querschnittsansicht sowie den Temperaturverlauf T der Schürze entlang des ersten Abschnitts 4a (siehe Fig. 3) bzw. von Punkt A bis Punkt B entlang der Breite B1 des ersten Abschnitts 4a. Zum Vergleich ist der Temperaturverlauf T einer gestrichelt dargestellten Schürze von Punkt A bis Punkt B' gemäß dem ersten Ausführungsbeispiel gezeigt. Man erkennt, dass bei gleicher Temperatur der Strahlfläche 5 (linkes Ende der T-Kurven) der Punkt B der thermisch gekoppelten Schürze mit Abwinkelung (4c in Fig. 2 und Punkt B in Fig. 3) gemäss zweitem Ausführungsbeispiel eine höhere Temperatur (rechtes Ende der durchgezogenen T-Kurve) hat als der Punkt B' einer thermisch gekoppelten Schürze ohne Abwinkelung (rechtes Ende der gestrichelten T-Kurve). Da die Strahlungsleistung einer Oberfläche mit Temperatur T proportional zu $T^4$ ist, wird die gegenüber der gestrichelten Breite von A nach B' kürzere Breite B1 von A nach B durch die höhere Durchschnittstemperatur entlang der Breite B1 überkompensiert, was dazu führt, dass die thermisch gekoppelte Schürze des zweiten Ausführungsbeispiels bei gleicher Temperatur der Strahlfläche 5 insgesamt einen höheren Beitrag zur Strahlungsleistung liefert als die thermisch gekoppelte Schürze ohne Abwinkelung.

Die thermische Kopplung wird durch den an der Schürze 3, 4 vorhandenen Andockbereich bzw. Hakenbereich H erzielt, mit welchem die Schürze 3, 4 an einem Seitenrand R der Strahlplatte 2 angebracht bzw. eingehängt werden kann. Der Hakenbereich H der Schürze 3, 4 und der Seitenrand R der Strahlplatte sind zueinander komplementär ausgebildet, so dass die am Seitenrand R der Strahlplatte 2 angebrachte bzw. eingehängte Schürze 3, 4 grossflächig am Seitenrand R der Strahlplatte 2 anliegt, wodurch zwischen der Strahlplatte 2 und der Schürze 3, 4 eine gute thermische Kopplung gegeben ist.

**Bezugszeichen**

| 1 | Deckenstrahlflächenaufbau |
|---|---|
| 2 | Strahlplatte |
| 3 | Schürze |
| 3a | erster Abschnitt / Schürzen-Strahlfläche |
| 3b | zweiter Abschnitt |
| 3c | Abwinkelung |
| 4 | Schürze |
| 4a | erster Abschnitt der Schürze / Schürzen-Strahlfläche |
| 4b | zweiter Abschnitt der Schürze |
| 4c | Abwinkelung |
| 5 | Strahlfläche / Strahlplatten-Strahlfläche |
| 6 | Rohraufnahme |
| 7 | Rohr |
| 8 | Isolationskörper |
| 9 | Seitenwand |
| 10 | Seitenwand |
| 11 | Verbindungsplatte |
| 12 | Auflageabschnitt |
| 13 | Auflageabschnitt |
| 16a | erster Abschnitt der Strahlfläche |
| 16b | zweiter Abschnitt der Strahlfläche |
| 17a | erster Abschnitt der Strahlfläche |
| 17b | zweiter Abschnitt der Strahlfläche |
| 18 | horizontaler Abschnitt |
| 21a | erster Abschnitt der Isolationsschicht |
| 21b | zweiter Abschnitt der Isolationsschicht |
| 22a | erster Abschnitt der Isolationsschicht |
| 22b | zweiter Abschnitt der Isolationsschicht |
| 23 | Isolationsschicht |
| B1 | Breite des ersten Abschnitts |
| B2 | Breite des zweiten Abschnitts |
| R | Randbereich der Strahlplatte |
| H | Andockbereich oder Hakenbereich der Schürze |

**Patentansprüche**

1. Strahlflächenaufbau (1), insbesondere Deckenstrahlflächenaufbau, mit Rohren (7) und/oder einem Rohrregister zur Führung eines Heiz- und/oder Kühlmediums, mit einer eine Strahlfläche (5) bereitstellenden Strahlplatte (2) und mit einer Schürze (3, 4), wobei die Schürze (3, 4) der Strahlplatte (2) derart seitlich zugeordnet ist, dass sie die Konvektion von Luft über einen Seitenrand der Strahlplatte (2) hinweg begrenzt, wobei die Schürze (3, 4) und die Strahlplatte (2) thermisch leitend miteinander verbunden sind, **dadurch gekennzeichnet, dass** eine nach unten oder nach innen weisende Strahlfläche (16a, 16b, 17a, 17b) der Schürze (3, 4) einen Emissionsgrad ($\varepsilon$) zwischen 0.9 und 1 aufweist.

2. Strahlflächenaufbau nach Anspruch 1, **dadurch gekennzeichnet, dass** die Schürze (3, 4) und die Strahlplatte (2) über ein thermisches Leitungselement (9, 10) miteinander verbunden sind.

3. Strahlflächenaufbau nach Anspruch 1 oder 2, **dadurch gekennzeichnet, dass** die Schürze (3, 4) eine sich parallel zur Strahlplatten-Strahlfläche (5) der Strahlplatte (2) erstreckende Schürzen-Strahlfläche (3a, 4a) aufweist und/oder wobei die Schürze (3, 4) einen Andockbereich bzw. Hakenbereich (H) aufweist, mit welchem sie an einem Seitenrand (R) der Strahlplatte (2) angebracht bzw. eingehängt ist.

4. Strahlflächenaufbau nach einem der vorherigen Ansprüche, **dadurch gekennzeichnet, dass** die Schürze (3, 4) einen ersten Abschnitt (3a, 4a) und einen dazu abgewinkelten zweiten Abschnitt (3b, 4b) aufweist.

5. Strahlflächenaufbau nach Anspruch 4, **dadurch gekennzeichnet, dass** der erste Abschnitt (3a, 4a) der Schürze (3, 4) eine erste Strahlfläche (16a, 17a) aufweist, welche sich parallel zur Strahlfläche (5) der Strahlplatte (2) erstreckt und/oder wobei der zweite Abschnitt (3b, 4b) einer jeweiligen Schürze (3, 4) jeweils eine zweite Strahlfläche (16b, 17b) aufweist, welche sich quer, insbesondere orthogonal, zur Strahlfläche (5) der Strahlplatte (2) erstreckt.

6. Strahlflächenaufbau nach einem der Ansprüche 4 oder 5, **dadurch gekennzeichnet, dass** die erste Strahlfläche (16a, 17a) einer jeweiligen Schürze (3, 4) und die Strahlfläche (5) der Strahlplatte (2) sich in/entlang einer gemeinsamen Ebene erstrecken.

7. Strahlflächenaufbau nach einem der vorherigen Ansprüche, **dadurch gekennzeichnet, dass** der Emissionsgrad ($\varepsilon$) zwischen 0,92 und 0,99 liegt.

8. Strahlflächenaufbau nach einem der vorherigen Ansprüche wobei der erste Abschnitt einer jeweiligen Schürze eine sich vom Rand der Strahlfläche bis zur Abwinkelung der jeweiligen Schürze erstreckende Breite B1 aufweist, welche im Bereich des einfachen Abstandes und des vierfachen Abstandes der Rohre liegt.

9.  Strahlflächenaufbau nach einem der vorherigen Ansprüche wobei der zweite Abschnitt einer jeweiligen Schürze eine sich von der Abwinkelung der jeweiligen Schürze bis zum Rand der Schürze erstreckende Breite B2 aufweist, welche im Bereich des zweifachen Durchmessers bis achtfachen Durchmessers der Rohre (7) liegt.

10. Strahlflächenaufbau nach einem der vorherigen Ansprüche wobei eine nach oben oder nach aussen weisende Strahlfläche bzw. Spiegelfläche der Schürze einen Emissionsgrad (ε), welcher zwischen 0 und 0,06, insbesondere zwischen 0,02 und 0,04 liegt.

11. Deckenstrahlheizung oder Deckenstrahlkühlung umfassend einen Strahlflächenaufbau nach einem der vorherigen Ansprüche.

**Claims**

1.  A radiating surface structure (1), in particular a ceiling radiating surface structure, with tubes (7) and/or a tube register for guiding a heating and/or cooling medium, with a radiating panel (2) providing a radiating surface (5) and with a skirt (3, 4), wherein the skirt (3, 4) is laterally associated with the radiating panel (2) in such a manner that it limits the convection of air over a side edge of the radiating panel (2), the skirt (3, 4) and the radiating panel (2) being thermally conductively connected to one another, **characterized in that** a downwardly or inwardly facing radiating surface (16a, 16b, 17a, 17b) of the skirt (3, 4) has an emissivity (ε) between 0.9 and 1.

2.  The radiating surface structure according to claim 1, **characterized in that** the skirt (3, 4) and the radiating panel (2) are connected to each other via a thermal conduction element (9, 10).

3.  The radiating surface structure according to claim 1 or 2, **characterized in that** the skirt (3, 4) has a skirt radiating surface (3a, 4a) extending parallel to the radiating surface of the radiating panel (5) of the radiating panel (2) and/or wherein the skirt (3, 4) has a docking region or hook region (H) with which it is attached or hooked to a side edge (R) of the radiating panel (2).

4.  The radiating surface structure according to one of the previous claims, **characterized in that** the skirt (3, 4) has a first section (3a, 4a) and a second section (3b, 4b) angled with respect thereto.

5.  The radiating surface structure according to claim 4, **characterized in that** the first section (3a, 4a) of the skirt (3, 4) has a first radiating surface (16a, 17a) which extends parallel to the radiating surface (5) of the radiating panel (2) and/or wherein the second section (3b, 4b) of a respective skirt (3, 4) has in each case a second radiating surface (16b, 17b) which extends transversely, in particular orthogonally, to the radiating surface (5) of the radiating panel (2).

6.  The radiating surface structure according to one of claims 4 or 5, **characterized in that** the first radiating surface (16a, 17a) of a respective skirt (3, 4) and the radiating surface (5) of the radiating panel (2) extend in/along a common plane.

7.  The radiating surface structure according to one of the previous claims, **characterized in that** the emissivity (ε) is between 0.92 and 0.99.

8.  The radiating surface structure according to one of the previous claims wherein the first section of a respective skirt has a width B1 extending from the edge of the radiating surface to the bend of the respective skirt, which width B1 is in the range of the single spacing and the quadruple spacing of the tubes.

9.  The radiating surface structure according to one of the preceding claims, wherein the second section of a respective skirt has a width B2 extending from the bend of the respective skirt to the edge of the skirt, which lies in the range of two times the diameter to eight times the diameter of the tubes (7).

10. The radiating surface structure according to one of the previous claims, wherein an upwardly or outwardly facing radiating surface or reflecting surface of the skirt has an emissivity (ε) which is between 0 and 0.06, in particular between 0.02 and 0.04.

11. The radiant ceiling heating system or radiant ceiling cooling system comprising a radiating surface structure according to any one of the preceding claims.

**Revendications**

1.  Structure de surface rayonnante (1), en particulier structure de surface rayonnante de plafond, avec des tubes (7) et/ou un registre de tubes pour le guidage d'un fluide de chauffage et/ou de refroidissement, avec un panneau rayonnant (2) fournissant une surface rayonnante (5) et avec un tablier (3, 4), le tablier (3, 4) étant associé latéralement au panneau rayonnant (2) de telle sorte, qu'elle limite la convection d'air par-dessus un bord latéral du panneau rayonnant (2), le tablier (3, 4) et le panneau rayonnant (2) étant reliés l'un à l'autre de manière thermiquement conductrice, **caractérisé en ce qu'**une surface rayonnante (16a, 16b, 17a, 17b) de le tablier (3, 4) orienté vers le bas ou vers l'intérieur présente une émissivité ($\varepsilon$) comprise entre 0. 9 et 1.

2. La structure de surface rayonnante selon la revendication 1, **caractérisée en ce que** le tablier (3, 4) et le panneau rayonnant (2) sont reliés entre eux par un élément de conduction thermique (9, 10).

3. La structure rayonnante selon la revendication 1 ou 2, **caractérisée en ce que** le tablier (3, 4) présente une surface rayonnante du tablier (3a, 4a) s'étendant parallèlement à la surface rayonnante (5) du panneau rayonnant (2) et/ou le tablier (3, 4) présentant une zone d'amarrage resp. une zone de crochet (H) par laquelle elle est attachée resp. accrochée à un bord latéral (R) du panneau rayonnant (2).

4. La structure de surface rayonnante selon l'une des revendications précédentes, **caractérisée en ce que** le tablier (3, 4) présente une première section (3a, 4a) et une deuxième section (3b, 4b) coudée par rapport à la première.

5. La structure de surface rayonnante selon la revendication 4, **caractérisée en ce que** la première section (3a, 4a) du tablier (3, 4) présente une première surface rayonnante (16a, 17a) qui s'étend parallèlement à la surface rayonnante (5) du panneau rayonnant (2) et/ou la deuxième section (3b, 4b) d'un tablier respectif (3, 4) présente respectivement une deuxième surface rayonnante (16b, 17b) qui s'étend transversalement, en particulier orthogonalement, à la surface rayonnante (5) du panneau rayonnant (2).

6. La structure de surface rayonnante selon l'une des revendications 4 ou 5, **caractérisée en ce que** la première surface rayonnante (16a, 17a) d'un tablier respectif (3, 4) et la surface rayonnante (5) du panneau rayonnant (2) s'étendent dans/le long d'un plan commun.

7. La structure de surface rayonnante selon l'une quelconque des revendications précédentes, **caractérisée en ce que** l'émissivité ($\varepsilon$) est comprise entre 0,92 et 0,99.

8. La structure de surface rayonnante selon l'une des revendications précédentes dans laquelle la première section d'un tablier respectif présente une largeur B1 s'étendant du bord de la surface rayonnante jusqu'au coude du tablier respectif, qui se situe dans la plage de la distance simple et de la distance quadruple entre les tubes.

9. La structure de surface rayonnante selon l'une des revendications précédentes, dans laquelle la deuxième section d'un tablier respectif présente une largeur B2 s'étendant depuis le coude du tablier respectif jusqu'au bord du tablier, qui se situe dans la plage de deux fois le diamètre à huit fois le diamètre des tubes (7).

10. La structure de surface rayonnante selon l'une des revendications précédentes, une surface rayonnante ou une surface réfléchissante du tablier orientée vers le haut ou vers l'extérieur présentant une émissivité ($\varepsilon$) qui est comprise entre 0 et 0,06, en particulier entre 0,02 et 0,04.

11. Chauffage par rayonnement de plafond ou refroidissement par rayonnement de plafond comprenant une structure de surface rayonnante selon l'une quelconque des revendications précédentes.

Fig. 1

**Fig. 3**

**Fig. 2**

**IN DER BESCHREIBUNG AUFGEFÜHRTE DOKUMENTE**

**In der Beschreibung aufgeführte Patentdokumente**

- FR 2085165 A1
- DE 202016105364 U1

- EP 2206970 A1